# EUROPEAN PATENT APPLICATION

(11) **EP 2 706 434 A2**
(43) Date of publication of application: **12.03.2014**
(21) Application number: 13181873.4
(22) Date of filing: 27.08.2013
(51) Int. Cl.: G06F 3/01

(54) **Gesture recognition apparatus, control method thereof, display instrument, and computer readable medium**

(30) Priority: 31.08.2012 JP 2012192036
(71) Applicant: OMRON CORPORATION, Kyoto-shi, Kyoto 600-8530 (JP)
(72) Inventor: Yamashita, Takayoshi, Kyoto, 600-8530 (JP)
(74) Representative: Isarpatent

(57) **Abstract**

A gesture recognition apparatus for recognizing a gesture of a user from a moving image in which the user is photographed is provided, the gesture recognition apparatus comprising: a sight line direction estimation part configured to estimate a sight line direction of the user; a determination part configured to determine that the user intends to start the gesture when an angle formed by a first predetermined direction and the sight line direction is less than a predetermined value in a predetermined period; and a notification part configured to notify the user that the determination is made, when the determination part determines that the user intends to start the gesture.

## Description

### TECHNICAL FIELD

The present invention relates to a gesture recognition apparatus that recognizes a gesture from action of a recognition-target object, a control method thereof, a display instrument, and a computer readable medium.

### BACKGROUND ART

Recently, a display instrument, in which a display device such as a television receiver, a personal computer, and a tablet terminal is combined with a gesture recognition apparatus that recognizes a gesture of a recognition-target object operated by an operator, appears on the scene. In the display instrument, there is a demand for the gesture recognition apparatus, which recognizes the gesture made using an operator's hand or finger such that necessity for the operator to wear a special accessory such as a data glove is eliminated and such that the operator naturally and smoothly performs an operation to the display instrument. In the current gesture recognition apparatus, the gesture recognition is performed using an HMM (Hidden Markov Model) or continuous DP (Dynamic Programming).

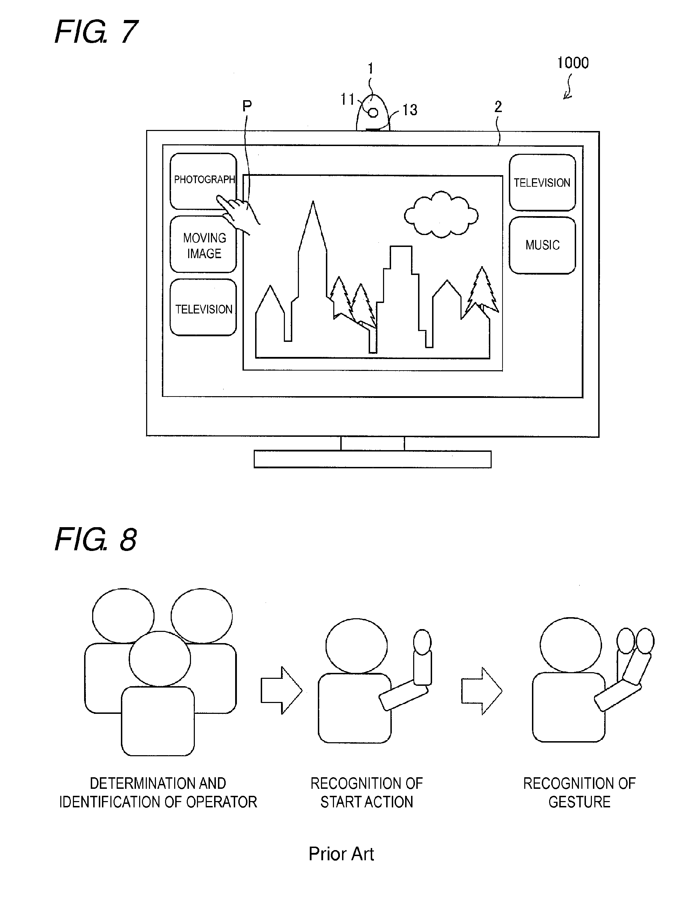

A flow of the gesture recognition in the conventional gesture recognition apparatus will be described with reference to Fig. 8. As illustrated in Fig. 8, in the conventional gesture recognition, at first the operator is identified or determined. That is, the gesture recognition apparatus determines which one of a plurality of recognized persons is set to the operator or determines whether the recognized person is included in a previously-registered operator list. Then the operator transmits a start of the gesture to the gesture recognition apparatus. Specifically, for example, when the operator performs a start action such that the operator raises the operator's hand, the gesture recognition apparatus recognizes the start action to be ready to perform the gesture recognition of a recognition-target object (for example, the operator's hand and a pointer). Then the gesture recognition apparatus recognizes the gesture that is made by the operator using the recognition-target object after the start action.

As an example of the gesture recognition apparatus, Japanese Unexamined Patent Publication No. 2011-192090 (published on September 29, 2011) discloses a gesture recognition apparatus which recognizes, when determining that a movement speed of a specific subject is faster than a given value and when determining that a movement pattern converges within a given range, the movement speed and the movement pattern as an instruction to start or end the gesture recognition processing. Specifically, in the gesture recognition apparatus, the user's hand is set as the specific subject, and the gesture recognition is started and ended when the short and quick action such as high-speed hand movement is detected from the specific subject.

In an interface device disclosed in Japanese Unexamined Patent Publication No. 2011-232894 (published on November 17, 2011), a reference body having a feature approximate to a predetermined setting value is detected by analyzing a photographed image, and a body satisfying a specific condition in which a relative relationship with the reference body is previously determined is identified as the recognition-target object. For example, the reference body is a face of a person, and the recognition-target object is a shape and a color of the hand with which a portion of the face of the person is covered.

However, in the technology disclosed in Japanese Unexamined Patent Publication No. 2011-192090, it is necessary for the user to perform the hand movement every time the gesture recognition apparatus starts or ends the gesture recognition.

In the technology disclosed in Japanese Unexamined Patent Publication No. 2011-232894, the interface device automatically identifies the body satisfying the specific condition in which the relative relationship with the reference body is previously determined as the recognition-target object. Therefore, there is a problem that the body that is not intended by the user is possibly identified as the recognition-target object.

In view of the problems described above, it is recognized that it is desirable to provide a gesture recognition apparatus that can start the gesture recognition by the natural action of the user and correctly determine the user's intention to start the gesture.

### SUMMARY

In accordance with one aspect of the present invention, a gesture recognition apparatus for recognizing a gesture of a user from a moving image in which the user is photographed, comprises: a sight line direction estimation part configured to estimate a sight line direction of the user; a determination part configured to determine that the user intends to start the gesture when an angle formed by a predetermined direction and the sight line direction is less than a first predetermined value in a predetermined period; and a notification part configured to notify the user that the determination is made, when the determination part determines that the user intends to start the gesture.

In accordance with another aspect of the present invention, a method for controlling a gesture recognition apparatus that recognizes a gesture of a user from a moving image in which the user is photographed, the method comprises: estimating a sight line direction of the user; determining that the user intends to start the gesture when an angle formed by a predetermined direction and the sight line direction is less than a predetermined value in a predetermined period; and notifying the user that the determination is made, when the determination that the user intends to start the gesture is made.

### BRIEF DESCRIPTION OF THE DRAWINGS

Fig. 1 is a block diagram illustrating a configuration of a gesture recognition apparatus according to a first embodiment of the present invention;
Fig. 2 is a flowchart illustrating action of the gesture recognition apparatus in Fig. 1;
Fig. 3 is a schematic diagram illustrating a recognition area and a face position, which are set by a controller included in the gesture recognition apparatus in Fig. 1;
Figs. 4A and 4B are schematic diagrams illustrating a face direction and a sight line direction, which are estimated by the controller included in the gesture recognition apparatus in Fig. 1, Fig. 4A illustrates the case that the sight line direction and the face direction of an operator are oriented toward a front, and Fig. 4B illustrates the case that the sight line direction and the face direction of the operator are oriented sideways;
Fig. 5 is a block diagram illustrating a configuration of a gesture recognition apparatus according to a second embodiment of the present invention;
Fig. 6 is a flowchart illustrating action of the gesture recognition apparatus in Fig. 5;
Fig. 7 is an external view illustrating a display instrument to which the gesture recognition apparatus of the present invention is applied; and
Fig. 8 is an explanatory view illustrating a general flow of gesture recognition.

### DETAILED DESCRIPTION

Hereinafter, first and second embodiments of the present invention will be described in detail.

### [First embodiment]

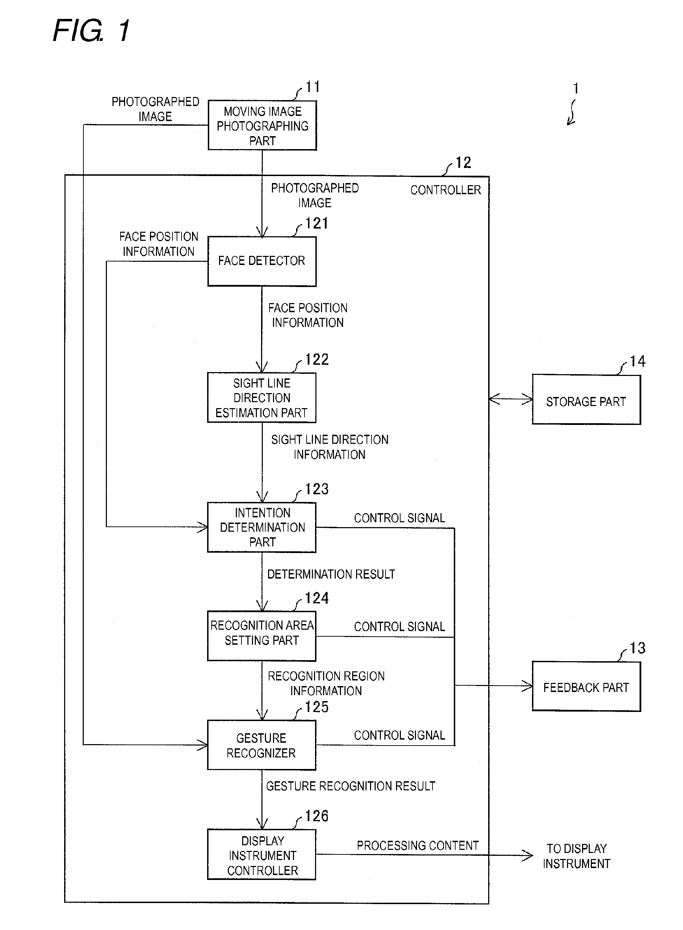

A gesture recognition apparatus 1 according to a first embodiment of the present invention will be described below with reference to Figs. 1 to 4.

### (Configuration of gesture recognition apparatus 1)

A configuration of the gesture recognition apparatus 1 will be described with reference to Fig. 1. Fig. 1 is a block diagram illustrating the configuration of the gesture recognition apparatus 1.

As illustrated in Fig. 1, the gesture recognition apparatus 1 includes a moving image photographing part 11, a controller 12, a feedback part (notification part) 13, and a storage part 14. Details of each member will be described below.

### (1. Moving image photographing part 11)

The moving image photographing part 11 photographs a spatial image including an operator (that is, a user). More particularly, the moving image photographing part 11 photographs the image of the operator who is a main body performing a gesture and the image of a recognition-target object that becomes a target of gesture recognition, and generates moving image data. The moving image photographing part 11 transmits a photographed frame image to a face detector 121 and a gesture recognizer 125 at regular intervals of a predetermined time (for example, 1/15 second).

### (2. Controller 12)

The controller 12 wholly controls each member included in the gesture recognition apparatus 1, and the controller 12 includes the face detector 121, a sight line direction estimation part 122, an intention determination part (determination part) 123, a recognition area setting part 124, the gesture recognizer 125, and a display instrument controller 126. The detail of each part included in the controller 12 is described later.

### (3. Feedback part 13)

The feedback part 13 feeds back a recognition stage of the gesture recognition apparatus 1 to the operator. Particularly, the feedback part 13 performs the feedback to the user in each recognition stage based on control signals input from the intention determination part 123, the recognition area setting part 124, and the gesture recognizer 125, which are included in the controller 12. Therefore, the operator can understand whether the operator's own operation or action is recognized by the gesture recognition apparatus 1.

In the gesture recognition apparatus 1 of the first embodiment, the feedback part 13 includes an LED as one of feedback techniques, and the LED emits light in a different color in each recognition stage of the gesture recognition apparatus 1.

According to the configuration, the color of the LED notifies the user of a determination result made by the intention determination part 123. Accordingly, the user can understand that each determination is made in the gesture recognition apparatus 1 by checking the color of the LED. Therefore, the user can decide a proper operation that should be performed to the gesture recognition apparatus 1.

The feedback part 13 may be configured to be integral with another configuration of the gesture recognition apparatus 1, namely, the moving image photographing part 11 or the like, or the feedback part 13 may be configured to be able to be disposed at a distance from the moving image photographing part 11. The LED may be configured to vary light emission states such as lights up, lights off, and blink of the LED in each recognition stage, or the LED may be configured to display the recognition stage on a screen of a display device (not illustrated). For example, the color, a text, and an icon may be used as a display method in the case that the recognition stage is displayed on the screen of the display device. Alternatively, every time the recognition stage changes, the user may be notified of the recognition stage at that point by sound output from an external sound output device (not illustrated). Not only the feedback part 13 performs the feedback in each recognition stage, but also the feedback part 13 may perform the feedback in the case that the recognition-target object is out of a recognition area OE or in the case that gesture recognition apparatus 1 fails in the gesture recognition.

For example, the recognition stage is divided into the following stages.
Stage 1: The stage at which the operator is not discovered (that is, the state in which the gesture recognition apparatus 1 does not identify or determine the operator), or the stage at which the gesture recognition apparatus 1 determines that the operator does not intend to start the gesture.
Stage 2: The stage at which the operator is determined to start the gesture (that is, the stage at which the gesture recognition apparatus 1 determines that the operator intends to start the gesture from a face position and a sight line direction of the operator).
Stage 3: The stage at which the recognition of the recognition-target object is completed (that is, the stage at which the gesture recognition apparatus 1 detects the recognition-target object in the recognition area OE).
Stage 4: The stage at which the gesture recognition is completed (that is, the stage at which the gesture recognition apparatus 1 ends the gesture recognition processing of the recognition-target object).

### (4. Storage part 14)

Various pieces of data handled by the gesture recognition apparatus 1 are stored in the storage part 14, and the storage part 14 includes a temporary storage part in which the data is temporarily stored and a storage device in which the data is stored in a nonvolatile manner. The temporary storage part is what is called a working memory in which the data used in calculation and a calculation result are temporarily stored in a process of various pieces of processing performed by the gesture recognition apparatus 1. For example, the temporary storage part includes a RAM. A control program and an OS program, which are executed by the controller 12, and various pieces of data to be read in performing various functions included in the gesture recognition apparatus 1 are stored in the storage device. For example, the storage device includes a ROM.

### (Detailed configuration of controller 12)

The detailed configuration of the controller 12 will be described with reference to Fig. 1.

### (1. face detector 121)

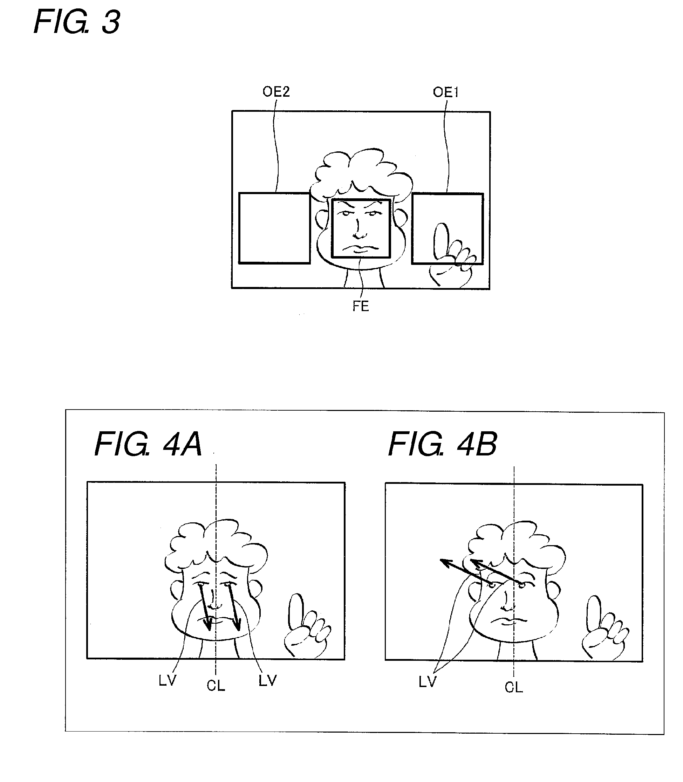

The face detector 121 acquires the image photographed by the moving image photographing part 11, and detects a human face and a face position FE (that is, an area occupied by the face in the image; see Fig. 3) from the image. The face detector 121 stores the face position FE estimated in each frame image in the storage part 14. The human face can be extracted from the image by a well-known face detection technology. For example, a skin color area is extracted in conjunction with template matching, the positions of an eyebrow and a mouth are estimated based on a color change in the skin color area, and a minimum square area having sides parallel to horizontal and vertical directions, which includes the estimated eyebrow and mouth, may be set as the face position FE.

### (Template matching)

The template matching means a method for calculating a degree of coincidence (matching) between a sample such as the input image and a previously-prepared model.

A flow of template matching processing will briefly be described below. For the purpose of the template matching, a template of face shape is previously stored in the storage part 14.

A portion of the skin color area extracted from the image is compared to the template of the face shape prepared in the storage part 14. In the skin color area, a portion in which a degree of similarity with the template is less than a predetermined value is determined not to be comparable to the human face, and excluded. Then the gesture recognition processing is performed to the remaining skin color area, namely, the area where the degree of similarity with the template is equal to or greater than the predetermined value. Desirably a plurality of templates different from each other may be used. In this case, in the template matching processing, the matching between each template and the sample is calculated, and the sample is determined to be comparable to the human face when the template having the degree of similarity with the sample is equal to or greater than the predetermined value exists.

### (2. Sight line direction estimation part 122)

The sight line direction estimation part 122 estimates a sight line direction LV (see Figs. 4A and 4B) of the operator. The sight line direction estimation part 122 stores the estimated sight line direction in the storage part 14 for each of all the frame images photographed by the moving image photographing part 11 or for each of a predetermined number of frame images photographed by the moving image photographing part 11.

### (Sight line direction estimation)

The estimation of the sight line direction may be implemented as follows.

The sight line direction estimation part 122 extracts the position of an eye in the image area corresponding to the face position FE. In order to extract the eye from the face position FE, the area having the highest luminance may be extracted from the face position FE. Therefore, generally the area of a white of eye is extracted. The area surrounded by a contour of the extracted white of eye constitutes the area of the eye. Then the sight line direction estimation part 122 extracts an iris. The iris can be discovered by extracting a low-luminance area where the white of eye that is of the high-luminance area is the surrounding area. After extracting the eye and the iris, the sight line direction estimation part 122 estimates the sight line direction from a deviation of the iris in a horizontal direction in the area of the eye. For example, in Fig. 4A, the sight line of the operator is oriented toward the front, namely, the direction of the moving image photographing part 11. On the other hand, in Fig. 4B, the sight line of the operator is oriented toward the left (that is, the rightward when viewed from the operator) of the moving image photographing part 11.

### (3. Intention determination part 123)

The intention determination part 123 acquires the face position FE and the sight line direction LV from the storage part 14. Particularly, the intention determination part 123 acquires the face positions FE and the sight line directions LV in a plurality of the successive frame images (for example, 30 frame images). The intention determination part 123 determines whether the face position of the operator remains still based on a displacement of the face position FE among the acquired frame images, and the intention determination part 123 determines whether the sight line direction of the operator remains still based on a displacement of the sight line direction LV among the frame images. At this point, when causing the gesture recognition apparatus 1 to recognize the gesture, the operator gazes at the moving image photographing part 11, namely, a camera. Therefore, when the operator intends to start the gesture, the face position of the operator remains still, and the sight line direction of the operator stands still while being oriented toward the moving image photographing part 11. In a predetermined number of successive frame images, the intention determination part 123 determines that the operator intends to start the gesture, when an angle formed by a predetermined direction and the sight line direction LV is less than a predetermined value (condition A), and when the displacement of the face position FE is less than a predetermined value (condition B).

Particularly, the intention determination part 123 determines that the operator intends to start the gesture when the following two intention determination conditions are satisfied.
Condition A: The sight line direction exists within an angle range of 10° with respect to the direction directly confronting the moving image photographing part 11 in the successive 30 frame images. That is, in the successive 30 frame images, the sight line direction is included in a cone, which spreads at an angle of 10° around a reference straight line connecting a center of the iris and the moving image photographing part 11 with the center of the iris as a vertex. Condition B: In the successive 30 frame images, the center (or a predetermined point such as a gravity center) of the face position FE is included in one circle having a diameter of 10% of a width (a horizontal length) of the face position FE.

However, the conditions that are used by the intention determination part 123 in order to determine whether the operator intends to start the gesture are not limited to the conditions A and B. For example, whether the sight line of the operator remains still while being oriented toward the feedback part 13 (see Fig. 7) instead of the moving image photographing part 11 may be determined as the condition A. Alternatively, whether the sight line of the operator remains still while being oriented toward another predetermined direction or one of a plurality of predetermined directions may be determined. In the conditions A and B, the angle of the cone and the diameter of the circle may be changed within a range where the sight line direction and the face position of the operator are considered to remain still. The sight line direction and the face position of the operator move largely with increasing angle of the cone and diameter of the circle, and the gesture recognition apparatus 1 starts the gesture recognition processing even if the operator hardly intends to start the gesture. On the other hand, with decreasing angle of the cone and diameter of the circle, the gesture recognition apparatus 1 starts the gesture recognition processing only when the sight line direction or the face position of the operator hardly moves.

### (4. Recognition area setting part 124)

The recognition area setting part 124 sets recognition areas OE1 and OE2 to a periphery of the face position FE, particularly to right and left positions of the face position FE (see Fig. 3). Sizes of the recognition areas OE1 and OE2 are set such that a length of each of sides of the recognition areas OE1 and OE2 becomes 1.5 times a length of the corresponding side of the face position FE. The recognition area setting part 124 extracts the recognition-target object (for example, a hand of the operator) in the recognition areas OE1 and OE2. In the case that the operator operates the recognition-target object at the position corresponding substantially to the side of the face, desirably range in height directions of the recognition areas OE1 and OE2 includes a range in height direction of the face position FE. For example, the recognition areas OE1 and OE2 are set such that center lines in the height directions of the recognition areas OE1 and OE2 are aligned with a center line in the height direction of the face position FE. Therefore, the centers in the height directions of the recognition areas OE1 and OE2 are aligned with the center in the height direction of the face position FE. As described above, the lengths of the sides of the recognition areas OE1 and OE2 are 1.5 times the length of the side of the face position FE. Accordingly, the range in the height direction of the recognition areas OE1 and OE2 include the range in the height direction of the face position FE.

According to the configuration, the recognition areas OE1 and OE2 are set to the right and left positions of the user's face. In the case that the user makes the gesture with the user's hand as the recognition-target object, the user can raise the user's hand to the right or left position of the user's face. Accordingly, the user can make the gesture by a natural behavior that the user raises the user's hand to the right or left position of the user's face.

Alternatively, in the case that the recognition-target object is the operator's hand, the recognition area setting part 124 may set a recognition area OE' after discovering the operator's hand (finger).

That is, in setting the recognition area OE', the recognition area setting part 124 sets the area around the face position FE as a search area. For example, the search area may be an area from one of the right and left sides of the face position FE to a side end closer to the edges of the side end of the image, or the whole of the image area except the face position FE.

Then the recognition area setting part 124 performs background difference between the successive frame images in the search area to extract a foreground from the image area except the face position FE. Then the recognition area setting part 124 extracts a leading end portion (more correctly, an upper end portion) in the extracted foreground. At this point, an area of elongated shape in which the length of the continuous identical color (for example, the skin color) in the longitudinal direction is greater than or equal to a predetermined length value and the length of the continuous identical color in the crosswise direction is less than the predetermined length value may be extracted in order to extract the leading end portion (the upper end portion). For example, as illustrated in Fig. 3, in the case that the operator raises an index finger beside the face position FE, the recognition area setting part 124 extracts the operator's hand by extracting the foreground from the image area except the face position FE. Then the recognition area setting part 124 extracts a leading end of the operator's index finger by extracting the leading end portion of the foreground. Then the recognition area setting part 124 sets the recognition area OE' around the leading end of the extracted index finger. Similarly to the recognition areas OE1 and OE2, the size of the recognition area OE' is set such that the length of each side becomes 1.5 times the length of the corresponding side of the face position FE.

According to the configuration, the recognition area setting part 124 extracts the area constituting the foreground from the image, detects a specific region (the leading end of the index finger) having a specific shape in the extracted foreground area, and sets the recognition area OE' around a specific position of the specific region. At this point, when the user makes the gesture, it is considered that the user exists in front of the gesture recognition apparatus 1 while another body does not exist between the gesture recognition apparatus 1 and the user, and that the user's face and the recognition-target object constitute the foreground in the image. Therefore, the recognition area setting part 124 extracts the foreground area except the user's face from the image, thereby extracting the recognition-target object (the user's hand).

Then the foreground area, namely, the specific shape of the recognition-target object is detected. The specific shape may be set to be the shape of the user's hand that makes the gesture, for example, the shape of the hand in which only the index finger is stretched like the first embodiment. For example, like the first embodiment, the specific position of the specific region may be set to be the leading end of the index finger. In this case, the recognition area OE' is set around the index finger of the user's hand.

The user brings the specific region to the desired position where the user easily makes the gesture, which allows the recognition area setting part 124 to set the recognition area OE' around the desired position.

In setting the recognition area OE', desirably the leading end portion of the foreground is not determined until the difference between the frame images in the extracted foreground becomes less than a predetermined value. This is attributed to the fact that, in the case of the large difference between the frame images in the foreground, the operator is in the middle of moving the recognition-target object to the desired position where the user makes the gesture, for example, the position beside the user's face. In such cases, the recognition area is set while the recognition-target object is currently moving, and possibly the setting position of the recognition area differs from the desired position of the operator.

### (5. Gesture recognizer 125)

The gesture recognizer 125 recognizes the position, the shape, and a displacement of the recognition-target object in the recognition areas OE1 and OE2. Examples of a method for recognizing the recognition-target object include a method for extracting the displacement of the hand position in each frame image and a method in which a model such as HMM is used.

### (Gesture recognition)

As described above, the method for measuring the displacement of the recognition-target object in each frame image and/or the method in which the method such as the HMM is used can be used to perform the gesture recognition. Particularly, processing, in which a pointer P displayed on the display device connected to the gesture recognition apparatus 1 is moved in the direction and a distance in which the recognition-target object is moved when the operator moves the recognition-target object, can be performed in the method for measuring the displacement of the recognition-target object. In the method in which the HMM is used, the model in each type of the gesture recognized by the gesture recognition apparatus 1 is stored in the storage part 14 in the form of a database. Then the gesture recognizer 125 calculates a likelihood of each model included in the database with respect to the image input to the gesture recognition apparatus 1. In the case that one or a plurality of models in which the likelihood to the input image is greater than or equal to a predetermined value is discovered, the gesture recognizer 125 sets the gesture corresponding to the model having the highest likelihood to the gesture recognized from the input image.

### (6. Display instrument controller 126)

The display instrument controller 126 performs processing corresponding to the gesture recognition result of the gesture recognizer 125 in the display instrument external to the gesture recognition apparatus 1. Particularly, the display instrument controller 126 refers to a gesture-processing content corresponding table indicating a processing content corresponding to each type of the gesture. The gesture-processing content corresponding table is stored in the storage part 14. Therefore, in the display instrument, the display instrument controller 126 performs the processing corresponding to the gesture recognition result of the gesture recognizer 125.

A display instrument 1000 controlled by the display instrument controller 126 will be described with reference to Fig. 7. The display instrument controller 126 transmits a control signal indicating an instruction to perform the processing content determined based on the gesture recognition result to a control functional part (not illustrated) included in the display instrument 1000. The control functional part receives the control signal transmitted from the display instrument controller 126, and performs the processing content. For example, the processing content is processing of moving the pointer P displayed on a display device 2 based on the recognition result of the displacement of the recognition-target object. Alternatively, the processing content may be processing of selecting an icon, which is displayed while overlapping with the pointer P, in the case that the gesture in which the operator makes a predetermined shape by the operator's hand is recognized. By the simple operation in which the recognition-target object is used, the operator can operate the display instrument 1000 without touching the screen of the display device 2.

### (7. Another part)

In addition to the above parts, the controller 12 may further include a face authentication part (not illustrated) that determines whether the person detected by the face detector 121 is certified as the operator or determines whether any one of the persons is certified as the operator in the case that a plurality of operator candidates exists. For example, in the case that the face detector 121 detects the plurality of faces, the face authentication part extracts a feature of each of the detected faces, and determines whether the feature of the face is matched with a feature of a face of a person included in an operator list (a person who is certified as the operator) previously stored in the storage part 14. At this point, a priority is given to the person included in the operator list, and the face authentication part certifies the person having the highest priority as the operator from all the persons detected by the face detector 121. Alternatively, in the case that the plurality of faces are detected, the face authentication part may certify the person who occupies the largest area in the image (that is, the person located closest to the moving image photographing part 11) as the operator. When determining that the person detected by the face detector 121 is not included in the operator list, the face authentication part may not certify the person as the operator.

### (Flow of gesture recognition processing)

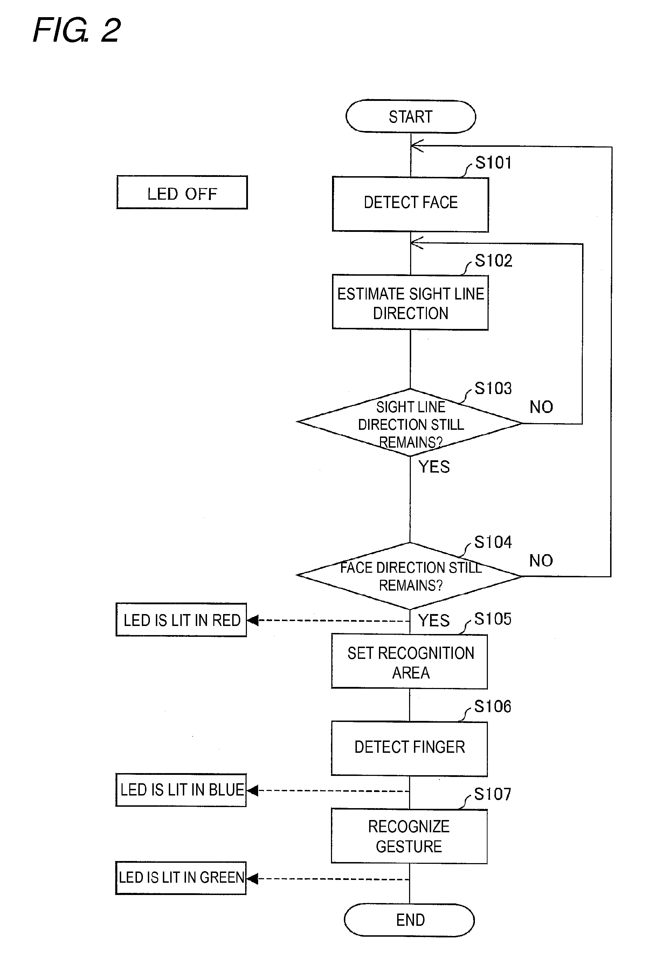

A flow of the gesture recognition processing performed by the controller 12 will be described with reference to Fig. 2. In the gesture recognition processing, whether the operator intends to start the gesture is determined based on the face position and the sight line direction of the operator, and the gesture recognition is started when the determination that the operator intends to start the gesture is made. The gesture recognition processing will be described below with reference to a flowchart in Fig. 2. It is assumed that the operator's hand is the recognition-target object handled by the operator.

In an initial state, the LED included in the feedback part 13 is turned off. Alternatively, in the initial state, the feedback part 13 may cause the LED to emit the light in the color indicating that the gesture recognition apparatus 1 is in a standby state.

In the gesture recognition processing, the face detector 121 detects the face (S101). The face detection method is described above. The face detector 121 sets the image area occupied by the detected face as the face position FE. The face detector 121 stores the data of the face position FE, which is detected in each frame image, in the storage part 14.

The sight line direction estimation part 122 estimates the sight line direction of the operator (S102). Particularly, as described above, the sight line direction estimation part 122 extracts the eye and the iris in the face position FE, and estimates the sight line direction based on the extracted eye and iris. The sight line direction estimation part 122 stores the data of the sight line direction, which is estimated in each frame image, in the storage part 14.

The intention determination part 123 determines whether the sight line direction remains still (S103). Particularly, the intention determination part 123 acquires the sight line directions in the plurality of successive frame images (for example, 30 frame images) from the storage part 14, and determines whether the sight line direction of the operator remains still based on the sight line directions. When the intention determination part 123 determines that the sight line direction does not remain still (NO in Step S103), the flow returns to the sight line direction estimation in Step S102.

The intention determination part 123 determines whether the face position detected by the face detector 121 remains still (S104). Particularly, the intention determination part 123 acquires the face positions in the plurality of successive frame images (for example, 30 frame images) from the storage part 14, and determines whether the operator's face remains still based on the face positions. When the intention determination part 123 determines that the face position does not remain still (NO in Step S104), the flow returns to the face detection in Step S101.

On the other hand, when the intention determination part 123 determines that the face position remains still (YES in Step S104), the recognition area setting part 124 sets the recognition areas OE1 and OE2 (see Fig. 3) in the peripheral area of the face position FE (S105). That is, only in the case that both the condition (the condition A) that the sight line direction remains still and the condition (the condition B) that the face position remains still are satisfied, the intention determination part 123 determines that the operator intends to start the gesture, and the recognition area setting part 124 sets the recognition areas OE1 and OE2. When the determination that the operator intends to start the gesture is made (that is, after Step S104 and before Step S105), the intention determination part 123 transmits the control signal to the feedback part 13 in order to issue the instruction to cause the LED to emit the light in red. The LED emits the light in red, so that the operator can understand that the intention to start the gesture is recognized by the gesture recognition apparatus 1.

The sequence of Steps S101 to S104 may be changed as follows. In this case, the face is detected (Step S101), and whether the face position remains still is determined (Step S104). If the face position does not remain still, the flow returns to the face detection in Step S101. When the face position remains still, the sight line direction is estimated (Step S102), and whether the sight line direction remains still is determined (Step S103). If the sight line direction does not remain still, the flow returns to the face detection in Step S101.

Then the gesture recognizer 125 detects the recognition-target object in the recognition areas OE1 and OE2 (S106). After detecting the recognition-target object, the gesture recognizer 125 transmits the control signal to the feedback part 13 in order to issue the instruction to change the color of the LED to blue. The emission color of the LED is changed from red to blue, which allows the operator to understand that the gesture recognition apparatus 1 is ready for the reception of the gesture recognition.

Then the gesture recognizer 125 starts the gesture recognition of the recognition-target object. Particularly, the gesture recognizer 125 recognizes the position, the displacement, and the shape of the recognition-target object (S107). After the gesture recognition is completed, the gesture recognizer 125 issues the instruction to the feedback part 13 to change the color of the LED to green. The emission color of the LED is changed from blue to green, which allows the operator to understand that the gesture recognition apparatus 1 completes the gesture recognition.

Thus, the gesture recognition apparatus 1 feeds back the recognition stage to the operator in each stage of the gesture recognition processing. Therefore, the operator can measure timing of starting the gesture or correct the gesture by checking the feedback.

After the gesture recognizer 125 completes the gesture recognition, the display instrument controller 126 performs the processing corresponding to the gesture recognition result in the display instrument in conjunction with the control functional part included in the display instrument.

### [Modification]

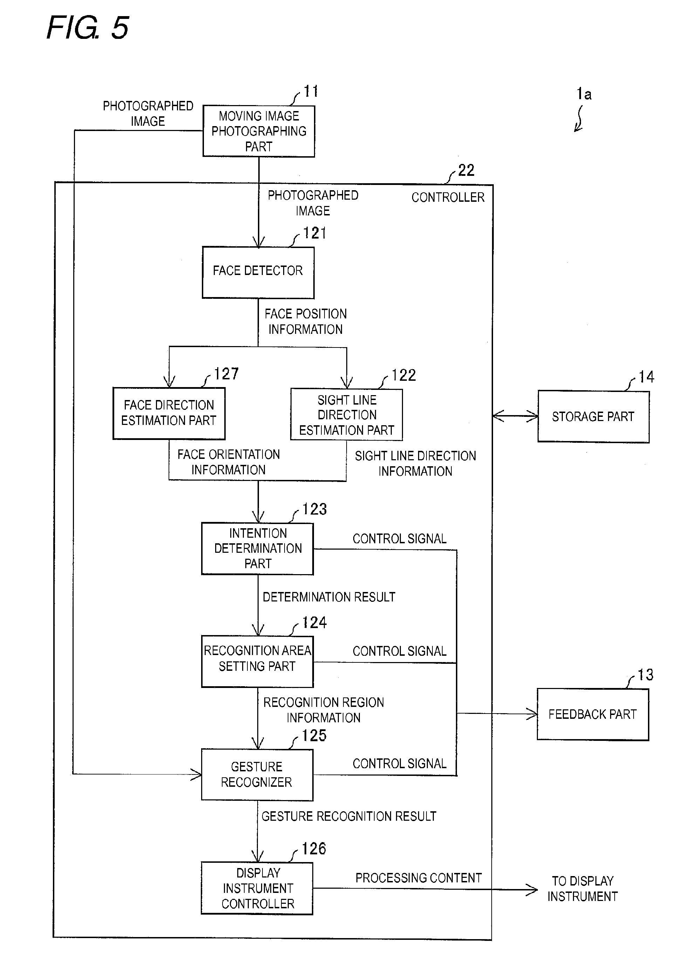

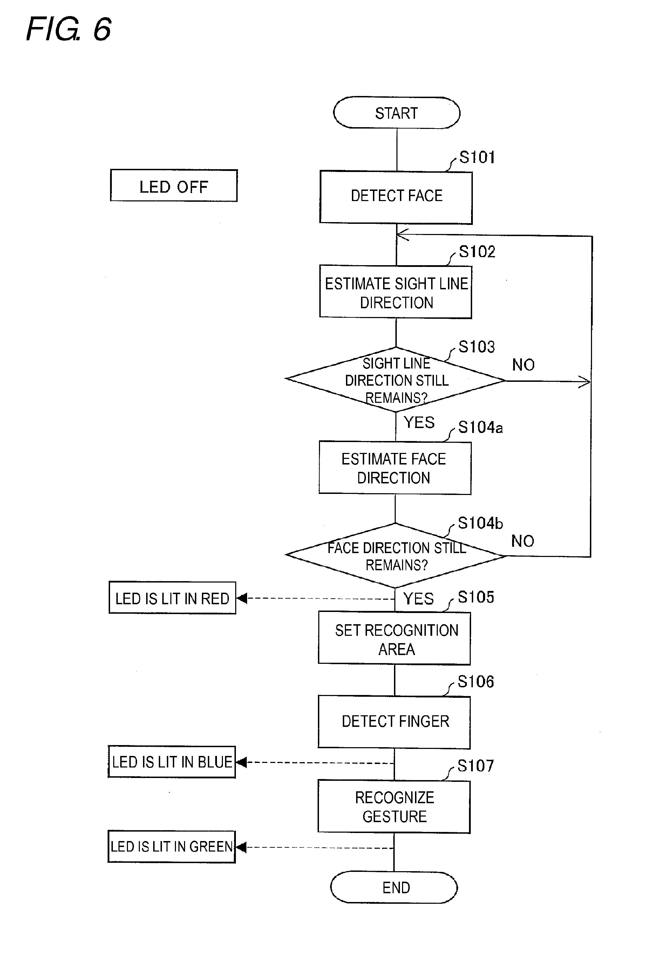

A modification of the gesture recognition apparatus 1 of the first embodiment will be described below with reference to Figs. 5 and 6. Fig. 5 is a block diagram illustrating a configuration of a gesture recognition apparatus 1a of the modification, and Fig. 6 is a flowchart illustrating a flow of gesture recognition processing α performed by a controller 22 included in the gesture recognition apparatus 1a. Hereinafter, for the sake of convenience, the member which is identical to that in the drawing of the first embodiment is designated by the identical numeral, and the description is omitted.

The modification is discussed below. When the operator gazes at the moving image photographing part 11 in order to cause the gesture recognition apparatus 1a to recognize the gesture, the sight line direction of the operator stands still while being oriented toward the moving image photographing part 11, and the operator's face stands still while directly confronting the moving image photographing part 11. Therefore, it is considered that the operator intends to start the gesture, in the case that the displacement of the position of the face detected by the face detector 121 is less than a predetermined value, and in the case that the angle formed by a face direction estimated by a face direction estimation part 127 and a predetermined direction is less than a predetermined value. In the modification, instead of the intention determination condition that the face position remains still like the first embodiment, the condition that the face direction remains still in the predetermined direction is used as one of the intention determination conditions. At this point, specifically the predetermined direction of the face direction may be a direction directly confronting the moving image photographing part 11. In the first embodiment, possibly the determination that the operator intends to start the gesture is made even if the face position remains still while the operator's face is not oriented toward the predetermined direction, for example, the direction of the moving image photographing part 11. On the other hand, in the modification, the determination that the operator intends to start the gesture is made based on the fact that the face direction remains still in the predetermined direction, so that the user's intention to start the gesture may be determined more correctly.

In the gesture recognition apparatus 1a of the modification, as illustrated in Fig. 5, the controller 22 further includes the face direction estimation part 127 that estimates the face direction of the operator in addition to the configuration of the controller 12. The face direction estimation part 127 estimates the face direction of the operator in the face position FE (see Fig. 3) acquired from the face detector 121. The face direction estimation method is as follows. In the gesture recognition processing α of the modification, as illustrated in Fig. 6, whether the face direction remains still is determined (Steps S104a and S104b) instead of determining whether the face position of the operator remains still in the gesture recognition processing (see Step S104 in Fig. 2).

### (Face direction estimation)

The estimation of the sight line direction can be applied in order to estimate the face direction of the person (in other words, a head orientation). Particularly, in the case that the eyes extracted from the moving image are symmetrically located with respect to a horizontal center line CL of the face position FE (see Fig. 4A), the face direction estimation part 127 determines that the face direction directly confronts the gesture recognition apparatus 1 (correctly, the moving image photographing part 11). On the other hand, in the case that the extracted eyes are asymmetrically located with respect to the center line CL (see Fig. 4B), the face direction estimation part 127 determines that the face direction does not directly confront the gesture recognition apparatus 1, namely, the operator looks aside.

The gesture recognition processing α performed by the gesture recognition apparatus 1a of the modification will be described below with reference to the flowchart in Fig. 6. In the gesture recognition processing α, the pieces of processing in Steps S101 to S103, and S105 to S107 are similar to those of the gesture recognition processing of the first embodiment, the description is omitted.

### (Flow of gesture recognition processing α)

When the intention determination part 123 determines that the sight line direction remains still (YES in Step S103), the face direction estimation part 127 estimates the face direction (S104a). The intention determination part 123 determines whether the face direction remains still in the predetermined direction in the plurality of successive frame images (for example, 30 frame images) (S104b). When the intention determination part 123 determines that the face direction does not remain still in the predetermined direction (NO in Step S104b), the flow returns to Step S102 to estimate the sight line direction again.

On the other hand, when the intention determination part 123 determines that the face direction remains still in the predetermined direction (YES in Step S104b), the flow goes to Step S105, and the recognition area setting part 124 sets the recognition areas OE1 and OE2 (see Fig. 3) like the gesture recognition processing of the first embodiment.

That is, in the modification, only in the case that both the condition (the condition A) that the sight line direction remains still in the predetermined direction and a condition (a condition B') that the face direction remains still in the predetermined direction are satisfied (YES in Step S103 and YES in S104b), the intention determination part 123 determines that the operator intends to start the gesture, and the recognition area setting part 124 sets the recognition areas OE1 and OE2. For example, the detailed condition B' that the operator's face stands still in the predetermined direction is as follows.
Condition B': A difference between the distance from the right eye of the operator to the center line CL and the distance from the left eye of the operator to the center line CL is less than or equal to 10% of the width of the face position FE in the successive 30 frame images.

In the modification, the determination that the operator intends to start the gesture is made in the case that both the condition (the condition A) that the sight line direction remains still and the condition (the condition B') that the face direction remains still are satisfied. However, the present invention is not limited to this, and alternatively, a condition (a condition B'1) that the operator's mouth indicates a specific shape change (for example, the shape change of the mouth shouting "Hello") may be used instead of the condition B', or a condition (a condition B'2) that the operator issues a specific sound (such as a voice or clapping of hands) may be used instead of the condition B'. Additionally, both or one of the conditions B'1 and B'2 is added to the conditions A and B', and the intention determination part 123 may determine that the operator intends to start the gesture when all the conditions are satisfied. Particularly, the gesture recognition apparatus 1 further includes two microphones in the case that the condition B'2 that the operator issues the specific sound is used as the intention determination condition. The two microphones are placed at positions different from each other, and the microphones record the sound at each position when the sound is issued. Therefore, the intention determination part 123 can identify the position where the sound is issued from the sounds recorded by the two microphones. The intention determination part 123 determines that the condition B'2 is satisfied, when the person located at the position where the sound is issued is the operator in whom the face is detected by the face detector 121. When the person except the operator issues the specific sound, the person is located at the position different from the operator, and the intention determination part 123 determines that the condition B'2 is not satisfied.

### [Second embodiment]

The display instrument 1000 according to a second embodiment of the present invention will be described below with reference to Fig. 7. For the sake of convenience, the member which is identical to that in the drawing of the first embodiment and the modification is designated by the identical numeral, and the description is omitted.

### (Configuration of display instrument 1000)

The display instrument 1000 having an exterior in Fig. 7 includes the gesture recognition apparatus 1 and the display device 2. In the display instrument 1000, the gesture recognition apparatus 1a of the modification may be used instead of the gesture recognition apparatus 1. Specifically, the display instrument 1000 is a personal computer. However, the present invention is not limited to this, and alternatively, the display instrument 1000 may be various display instruments, such as a television receiver, an internet television set, and a tablet terminal, which include a control function and a display function.

The gesture recognition apparatus 1 is placed above the display device 2 so as to be in contact with an upper side of the display device 2. The gesture recognition apparatus 1 is placed such that the operator (the user) located in the direction directly confronting the screen of the display device 2 sees the moving image photographing part 11 and the feedback part 13. Therefore, the operator can see the screen of the display device 2 while checking the feedback of the feedback part 13, and the moving image photographing part 11 is configured to be able to photograph the moving image of the operator located in front of the screen.

Although the gesture recognition apparatus 1 is placed above the display device 2 in Fig. 7, there is no particular limitation to the position where the gesture recognition apparatus 1 is placed. The gesture recognition apparatus 1 may be placed below the display device 2 or on the right or left side of the display device 2, or the gesture recognition apparatus 1 may be configured to be integral with the display device 2. As to the configuration in which the gesture recognition apparatus 1 and the display device 2 are integrally provided, for example, the moving image photographing part 11 may be included n a frame surrounding the screen of the display device 2. In the case that the display device 2 includes a web camera, the web camera can be used instead of the moving image photographing part 11. In this case, the whole of the gesture recognition apparatus 1 is implemented in a software manner.

### (Control of display instrument 1000)

In the second embodiment, the display instrument controller 126 controls the display of the display device 2 based on the gesture recognition result acquired from the gesture recognizer 125. For example, the display instrument controller 126 controls the pointer P displayed on the display device 2 in cooperation with the control functional part (not illustrated) included in the display instrument 1000. The pointer P works with the gesture of the recognition-target object based on the result of the recognition-target object gesture recognized by the gesture recognition apparatus 1. That is, when the operator operates the recognition-target object in the recognition areas OE1 and OE2, the pointer P works with the operation of the recognition-target object in the screen of the display device 2. The operator can operate the pointer P displayed on the screen without contacting the screen of the display device 2 or without use of a tool such as a remote controller.

A usage example of the display instrument 1000 will be described below. The operator (after checking whether the color of the LED included in the feedback part 13 is blue, namely, checking whether the gesture recognition apparatus 1 is ready to receive the gesture) makes the gesture in the recognition areas OE1 and OE2 using the recognition-target object (the hand). The gesture of the recognition-target object is photographed by the moving image photographing part 11, recognized by the gesture recognizer 125, and input to the display instrument controller 126. The display instrument controller 126 transmits a control content of the pointer P, which is determined based on the gesture recognition result, to the control functional part included in the display device 2. Therefore, the display instrument controller 126 controls the pointer P displayed on the display device 2 in cooperation with the control functional part. Alternatively, the display instrument controller 126 may be configured not only to control the action of the pointer P but also to be able to perform the processing content corresponding to the shape of the recognition-target object. For example, in the case that the operator performs the action to clench fists, the display instrument controller 126 can perform the control such that the icon, which is displayed at the position overlapping with the pointer P, is selected.

In the configuration of the display instrument 1000 of the second embodiment, the feedback part 13 is provided separately from the display device 2, and the feedback is performed to the operator by the emission of the LED like the first embodiment. However, the present invention is not limited to this, and alternatively, the feedback may be performed to the operator by the display of the display device 2. For example, the feedback may be performed to the operator by the icon, the text, and the color, which are displayed in a portion of the screen. Alternatively, the feedback may be performed to the operator by the sound output from a sound output device (not illustrated) included in the display device 2. In these configurations, the feedback part 13 is implemented in the software manner, and included in the controller 12.

As described above, according to the embodiments of the present invention, the gesture recognition apparatuses 1 and 1a can be caused to recognize the gesture without performing such starting action that the operator waves operator's hand. The gesture recognition apparatuses 1 and 1a feedback the recognition stage to the operator, so that the operator can perform the proper operation by checking the feedback. Additionally, using the operator's hand as the recognition-target object, the operator can operate the display instrument 1000 without use of a special tool such as a remote controller, a mouse, and a glove, and without contacting the screen of the display device 2. That is, the gesture recognition apparatuses 1 and 1a provide the interface for the operator to perform the natural, smooth, and interactive operation to the display instrument 1000.

According to the embodiments of the present invention, at first the sight line direction of the user is estimated. The determination that the user intends to start the gesture recognized by the gesture recognition apparatus is made when the estimated sight line direction remains substantially still in the predetermined direction. Only the user orients the sight line direction toward the predetermined direction when starting the gesture, but it may not be necessary for the user to perform such troublesome action that the user waves the user's hand. Therefore, by such natural method that the user orients the sight line toward the predetermined direction, the user can transmit the intention to start the gesture to the gesture recognition apparatus, and perform the gesture. As used herein the predetermined direction means a direction of the moving image photographing camera included in the gesture recognition apparatus.

According to the embodiments of the present invention, the sight line direction is considered to remain still when an angle formed by the predetermined direction and the sight line direction of the user is less than a first predetermined value. Accordingly, when notifying the gesture recognition apparatus of the intention to start the gesture, the user may orient the sight line toward the predetermined direction, for example, the direction included in a range of 10° or less with respect to the camera direction. Even if a fluctuation of the sight line direction or an estimation error of the sight line direction by the sight line direction estimation part exist, the user can transmit the intention to start the gesture to the gesture recognition apparatus by providing a certain degree of range to the direction in which the sight line direction is considered to remain still.

According to the embodiments of the present invention, when the determination that the user intends to start the gesture is determined, the user is notified of the determination result.

Therefore, it may not be necessary for the user to wonder whether the intention to start the gesture is transmitted to the gesture recognition apparatus. Accordingly, the user can properly determine whether the next action is to transmit the intention to start the gesture to the gesture recognition apparatus again or to start the gesture.

In the gesture recognition apparatus of the embodiments of the present invention, the notification part may notify the user that the determination is made, when the determination part determines at least one of a start and an end of the gesture recognition.

When the determination that the gesture recognition is started and/or ended is made, the user is notified of the determination result. Therefore, the user can start or end the gesture by checking each determination result.

The gesture recognition apparatus of the embodiments of the present invention further comprises a face detector configured to detect a face position of the user in the moving image, wherein the determination part may determine that the user intends to start the gesture, when the angle formed by the predetermined direction and the sight line direction is less than the first predetermined value in the predetermined period, and when a displacement of the face position detected by the face detector is less than a second predetermined value in the predetermined period.

The gesture recognition apparatus of the embodiments of the present invention further comprises a face direction estimation part configured to estimate a face direction of the user in the moving image, wherein the determination part may determine that the user intends to start the gesture, when the angle formed by the predetermined direction and the sight line direction is less than the first predetermined value in the predetermined period, and when an angle formed by the face direction estimated by the face direction estimation part and a predetermined direction is less than a third predetermined value in the predetermined period.

When the sight line direction remains still in the predetermined direction, and when the face position or the face direction remains still, the determination part determines that the user intends to start the gesture. It is considered that the face position and the face direction of the user remain still when the user faces the predetermined direction in order to transmit the intention to start the gesture to the gesture recognition apparatus. Therefore, compared with the configuration in which only the stillness of the sight line direction in the predetermined direction is used as the determination condition of the intention to start the gesture, whether the user starts the gesture can more correctly be determined by adding the stillness of the face position and the face direction to the determination condition.

The gesture recognition apparatus of the embodiments of the present invention may further include a recognition area setting part configured to set a recognition area that is of an area where the gesture is recognized.

The gesture recognition apparatus not performs the gesture recognition in the whole moving image, but sets a portion of an area of the moving image to the recognition area to perform the gesture recognition in the recognition area. Therefore, a processing load on the gesture recognition apparatus can be reduced in performing the gesture recognition of the recognition-target object.

The gesture recognition apparatus of the embodiments of the present invention may further include an instrument controller configured to issue an instruction to an external instrument to perform processing corresponding to a gesture recognition result.

The processing corresponding to the gesture recognition result is performed in the external instrument. For example, the external instrument is a display instrument including a display device. Therefore, the user can make the gesture to operate the external instrument such as the display instrument.

According to the embodiments of the present invention, the gesture recognition apparatus may be achieved by a computer. In this case, a control program causes the computer to perform each piece of processing of the gesture recognition apparatus controlling method.

According to the embodiments of the present invention, a display instrument comprises the gesture recognition apparatus; and a display device for displaying each piece of information held by the gesture recognition apparatus to a user, in which action is controlled by the gesture recognition apparatus.

As described above, the gesture recognition apparatus of the embodiments of the present invention for recognizing a gesture of a recognition-target object from a moving image in which the recognition-target object operated by the user is photographed, comprises: a sight line direction estimation part configured to estimate a sight line direction of the user; a determination part configured to determine that the user intends to start the gesture when an angle formed by a predetermined direction and the sight line direction is less than a predetermined value in a predetermined period; and a notification part configured to notify the user that the determination is made, when the determination part determines that the user intends to start the gesture.

The control method of a gesture recognition apparatus according to the embodiments of the present invention that recognizes a gesture of a recognition-target object from a moving image in which the recognition-target object operated by the user is photographed, the method includes: estimating a sight line direction of the user; determining that the user intends to start the gesture when an angle formed by a predetermined direction and the sight line direction is less than a predetermined value in a predetermined period; and notifying the user that the determination is made, when the determination that the user intends to start the gesture is made.

Therefore, in the gesture recognition apparatus of the embodiments of the present invention and the control method thereof, the user can start the gesture recognition by the natural action, and the user's intention to start the gesture can correctly be determined.

The present invention is not limited to the first and second embodiments and the modification, but various changes can be made without departing from the scope of the present invention. That is, an embodiment obtained by a combination of technical means disclosed in the first and second embodiments and the modification is also included in the technical scope of the present invention.

### [Construction example by software]

Each block of the gesture recognition apparatuses 1 and 1a, particularly each part included in the controllers 12 and 22 may be constructed by hardware using a logic circuit formed on an integrated circuit (an IC chip), or by software using a CPU (Central Processing Unit).

In the latter case, the gesture recognition apparatuses 1 and 1a include the CPU that executes a command of the program implementing each function, the ROM (Read Only Memory) in which the program is stored, the RAM (Random Access Memory) in which the program is expanded, and the storage device (the recording medium), such as a memory, in which the program and various pieces of data are stored. The object of the present invention can also be achieved in a manner such that the recording medium in which a program code (an executable format program, an intermediate code program, and a source program) of the control program for the gesture recognition apparatuses 1 and 1a, which are of the software implementing the above functions, is stored while being readable by a computer is supplied to the gesture recognition apparatuses 1 and 1a, and such that the computer (or the CPU or an MPU) reads and executes the program code recorded in the recording medium.

A non-transitory tangible medium can be used as the recording medium. Examples of the non-transitory tangible medium include tape systems such as a magnetic tape and a cassette tape, disk systems including magnetic disks such as a floppy disk (registered trademark) and a hard disk and optical disks such as a CD-ROM, an MO, an MD, a DVD, and a CD-R, card systems such as an IC card (including a memory card) and an optical card, semiconductor memory systems such as a mask ROM, an EPROM, an EEPROM (registered trademark) and a flash ROM, and logic circuits such as a PLD (Programmable logic device) and an FPGA (Field Programmable Gate Array).

The gesture recognition apparatuses 1 and 1a may be configured to be able to be connected to a communication network, and the program code may be supplied through the communication network. There is no particular limitation to the communication network as long as the program code can be transmitted through the communication network. Examples of the communication network include the Internet, an intranet, an extranet, a LAN, an ISDN, a VAN, a CATV communication network, a virtual private network, a telephone line network, a mobile communication network, and a satellite communication network. There is no particular limitation to a transmission medium constituting the communication network as long as the program code can be transmitted through the transmission medium. Examples of the transmission medium include wired lines, such as IEEE 1394, a USB, a power-line carrier, a cable TV line, a telephone line, and an ADSL (Asymmetric Digital Subscriber Line), and wireless lines, such as infrared rays, such as IrDA and a remote controller, Bluetooth (registered trademark), IEEE 802.11 wireless, HDR (High Data Rate), NFC (Near Field Communication), DLNA (Digital Living Network Alliance), a mobile phone network, a satellite line, and a terrestrial digital network. The present invention can also be implemented by a mode of a computer data signal buried in a carrier wave, and the computer data signal is one in which the program code is embodied by electronic transmission.

The present invention can be applied to various display instruments including the display device, particularly to a television receiver, a personal computer, and a tablet terminal.

## Claims

1. A gesture recognition apparatus (1, 1a) for recognizing a gesture of a user from a moving image in which the user is photographed, comprising:
a sight line direction estimation part (122) configured to estimate a sight line direction of the user;
a determination part (123) configured to determine that the user intends to start the gesture when an angle formed by a predetermined direction and the sight line direction is less than a first predetermined value in a predetermined period; and
a notification part (13) configured to notify the user that the determination is made, when the determination part (123) determines that the user intends to start the gesture.

2. The gesture recognition apparatus (1, 1a) according to claim 1, wherein the notification part (13) is configured to notify the user that the determination is made, when the determination part (123) determines at least one of a start and an end of the gesture recognition.

3. The gesture recognition apparatus (1, 1a) according to claim 1 or 2, further comprising a face detector (121) configured to detect a face position of the user in the moving image,
wherein the determination part (123) is configured to determine that the user intends to start the gesture, when the angle formed by the predetermined direction and the sight line direction is less than the first predetermined value in the predetermined period and when a displacement of the face position detected by the face detector (121) is less than a second predetermined value in the predetermined period.

4. The gesture recognition apparatus (1, 1a) according to claim 1 or 2, further comprising a face direction estimation part (127) configured to estimate a face direction of the user in the moving image,
wherein the determination part (123) is configured to determine that the user intends to start the gesture, when the angle formed by the predetermined direction and the sight line direction is less than the first predetermined value in the predetermined period and when an angle formed by the face direction estimated by the face direction estimation part (127) and a predetermined direction is less than a third predetermined value in the predetermined period.

5. The gesture recognition apparatus (1, 1a) according to claim 1 or 2, further comprising a recognition area setting part (124) configured to set a recognition area that is an area where the gesture is recognized.

6. The gesture recognition apparatus (1, 1a) according to any one of claims 1 to 5, further comprising an instrument controller (126) configured to issue an instruction to an external instrument to perform processing corresponding to a gesture recognition result.

7. A display instrument (1000) comprising:
the gesture recognition apparatus (1, 1a) according to claim 6; and
a display device (2) in which operation is controlled by the gesture recognition apparatus (1, 1a).

8. A method for controlling a gesture recognition apparatus (1, 1a) that recognizes a gesture of a user from a moving image in which the user is photographed, the method comprising:
estimating a sight line direction of the user (S102);
determining that the user intends to start the gesture when an angle formed by a predetermined direction and the sight line direction is less than a predetermined value in a predetermined period; and
notifying the user that the determination is made, when the determination that the user intends to start the gesture is made.

9. A computer readable medium storing a control program that causes a computer to perform each piece of processing of the gesture recognition apparatus (1, 1a) controlling method according to claim 8.
